(19) **Europäisches Patentamt / European Patent Office / Office européen des brevets**

(11) **EP 1 442 575 B1**

(12) **EUROPEAN PATENT SPECIFICATION**

(45) Date of publication and mention
of the grant of the patent:
**01.08.2007 Bulletin 2007/31**

(51) Int Cl.:
*H04L 29/06* (2006.01)     *G06F 13/14* (2006.01)
*H04L 12/56* (2006.01)

(21) Application number: **02760340.6**

(86) International application number:
**PCT/FI2002/000745**

(22) Date of filing: **19.09.2002**

(87) International publication number:
**WO 2003/041355 (15.05.2003 Gazette 2003/20)**

(54) **A METHOD AND A SYSTEM FOR STATELESS LOAD SHARING FOR A SERVER CLUSTER IN AN IP-BASED TELECOMMUNICATIONS NETWORK**

VERFAHREN UND SYSTEM ZUR ZUSTANDSLOSEN LASTVERTEILUNG FÜR EIN SERVER-CLUSTER IN EINEM AUF IP BASIERENDEN TELEKOMMUNIKATIONSNETZ

PROCEDE ET SYSTEME DE REPARTITION DE CHARGE PASSIVE POUR UNE BATTERIE DE SERVEURS DANS UN RESEAU DE TELECOMMUNICATIONS IP

(84) Designated Contracting States:
**AT BE BG CH CY CZ DE DK EE ES FI FR GB GR IE IT LI LU MC NL PT SE SK TR**

(30) Priority: **05.11.2001 FI 20012137**

(43) Date of publication of application:
**04.08.2004 Bulletin 2004/32**

(73) Proprietor: **Nokia Siemens Networks Oy**
**02610 Espoo (FI)**

(72) Inventors:
• **KROHN, Petri**
**FIN-00300 Helsinki (FI)**
• **LATVALA, Mikael**
**FIN-00550 Helsinki (FI)**

(74) Representative: **Simmelvuo, Markku Kalevi et al**
**Papula Oy,**
**P.O. Box 981**
**00101 Helsinki (FI)**

(56) References cited:
**WO-A1-99/38092          WO-A2-02/35359**
**US-A- 6 076 108          US-A- 6 081 840**

• **AVERSA L. ET AL.: 'Load balancing a cluster of web servers: using distributed packet rewriting' CONFERENCE PROCEEDINGS OF THE 2000 IEEE INTERNATIONAL PERFORMANCE, COMPUTING AND COMMUNICATIONS CONFERENCE (CAT. NO. 00CH37086), PROC. OF IPCCC 2000 20 February 2000 - 22 February 2000, PHOENIX, AZ, USA, pages 24 - 29, XP001017123**
• **HUNT G.D.H. ET AL.: 'Network dispatcher: a connection router for scalable internet services' PROC. OF WWW7, [Online] April 1998, BRISBANE, pages 1 - 13, XP002958463 Retrieved from the Internet: <URL:http://decweb.ethz.ch/WWW7/1899/com189 9.htm> [retrieved on 2002-12-13]**

EP 1 442 575 B1

## Description

### FIELD OF THE INVENTION

The present invention relates to telecommunications. In particular, the present invention relates to a novel and improved method and system for stateless load sharing for a server cluster in an IP based telecommunications network with high availability requirements.

### BACKGROUND OF THE INVENTION

A server cluster is a cluster of multiple server nodes across which server functionalities are distributed. Thus each functionality or application is divided into multiple parallel processes each running on different nodes.

In an IP (Internet Protocol, IP) based telecommunications network a server cluster typically has a single IP address identifying it to network elements utilizing its services. Internally, however, each node has at least one unique IP address. Using either a technique referred to as load sharing or a technique referred to as load balancing incoming IP traffic is distributed between the nodes. Load sharing refers to forwarding requests to server nodes. Load balancing refers to distributing requests to server nodes based on feedback from each node.

A typical server cluster comprises hundreds of nodes. New nodes may need to be added to the cluster, existing nodes may need to be removed or existing nodes may simply break down. A change in the cluster size will cause a reconfiguration or a reassignment of the nodes.

The IP traffic transmitted to a server cluster comprises sessions each of which comprises individual packets. All the packets of a session must be forwarded to the same server node. This can be achieved using either a stateful implementation or stateless implementation.

A stateful implementation of load sharing typically uses a stateful load balancer maintaining a session table which contains sessions served at one time. Using the session table the load balancer can forward subsequent IP packets belonging to a particular session to the same server node as the first packet of the session. An example of this approach is the ServerIron switch by Foundry Networks (http://www.foundrynet.com).

However, there are problems with stateful implementations. First of all, session awareness lowers the throughput of the load balancer. In practice, up to several million session entries are kept in the session table at one time. Thus memory requirements for a session table are significant which makes them difficult to implement. Also, a fault tolerant load balancer must checkpoint all the state information with another unit so that in case of switchover the other unit can assume the role of the failed unit without interruption. Thus, making a stateful load balancer fault tolerant means added complicity and increased signaling load. In addition, there is no way of knowing when a session ends. Usually a timer is used to clear sessions after 1-24 hours.

Stateless implementations of load sharing, such as broadcast based mechanisms for load sharing, do not use a load balancer. Instead they use a static algorithm to decide which server node to process. Typically the algorithm uses a hash function and hash bucket assignments. Examples of stateless implementations are Microsoft Windows NT Load Balancing Service and DHC Load Balancing Algorithm described in publication RFC3074 by IETF (Internet Engineering Task Force, IETF).

Prior art further includes AVERSA L. ET AL.: "Load Balancing a Cluster of Web Servers Using Distributed Packet Rewriting", Conference Proceedings of the 2000 IEEE International Performance, Computing and Communications Conference (Cat. No. OOCH37086), Proc. of IPCCC 2000, 20 February 2000 - 22 February 2000, Phoenix, AZ, USA, pages 24-29, XP001017123; which discloses stateless and stateful load balancing for a cluster of web servers, each server having its individual address.

However, there are problems with present stateless implementations also. They rely on a broadcast mode of communication; incoming packets are received by all nodes in a cluster and each node separately checks whether it should serve the request. The main problem with current stateless implementations is that they require a great deal of processing power since every packet must be received by all nodes. Additionally, they are not designed for systems with high availability requirements. In order to provide carrier grade level service the system downtime must be extremely low, e.g. 0,001% or lower. In addition, systems must be able to undergo normal maintenance operations which should not result in a complete system-wide shutdown or reset. The present solutions do not provide this.

Thus, there is need for a load balancer providing both scalability and high availability for carrier grade level service.

### SUMMARY OF THE INVENTION

The present invention concerns a method according to claim 1 and a system according to claim 14 for stateless load sharing for a server cluster in an IP based telecommunications network. The system comprises an IP based telecommunications network for dispatching IP traffic comprising sessions comprising packets. Examples of sessions in the context of the present invention are TCP/IP connections (Transmission Control Protocol/Internet Protocol), SCTP-associations (Stream Control Transmission Protocol); and additionally higher level protocol sessions such as SIP (Session Initiation Protocol) sessions and VoIP (Voice over IP) calls. The system further comprises a server cluster comprising functionally identical server nodes for running an application process, each server node of which is assigned at least one unique IP address. The system further comprises one or more functionally identical, stateless load balancers for receiving the IP packets and forwarding them to various server nodes. Forwarding in this context comprises changing destination address including destination port number and modifying checksums accordingly. Forwarding can also include modification to fields of higher-level protocols e.g. changing Stream-ID in the case of SCTP. The load balancers are connected to the server cluster.

According to the invention the load balancers further comprise a distribution key obtainer for identifying and extracting at least one predetermined field from each dispatched packet or PDU (Protocol Data Unit, PDU) contained within to be used as a packet or PDU specific distribution key. Examples of such fields are Call-ID fields of SIP (Session Initiation Protocol) and Transaction-ID field of TCAP. TCAP refers to Transaction Capabilities Part and it is used in connection with SS7 (Signaling System 7). In a case where a PDU is distributed over several packets, said packets have the same distribution key.

The load balancers further comprise a hasher for hashing each distribution key to obtain an offset value for each IP packet. Thus the offset value is calculated using the formula:

$$offset = hash(key) \ mod \ M,$$

where *key* represents the distribution key, hash represents a hash function, *M* represents the number of hash bucket assignments and *mod M* represents modulus M of hash value, and where the number of hash bucket assignments is larger than the number of the server nodes of the server cluster.

The load balancers further comprise a resolver for resolving a packet specific destination address for each packet using the obtained offset values, said destination address comprising the IP address of the server node to which said packet is to be forwarded.

In an embodiment of the invention the load balancers further comprise an assignment table consisting of entries each comprising an IP address assigned to a server node, said table containing the IP address of each server node in one or more entries, and a retriever for retrieving the destination address for a packet from the assignment table by using the obtained offset value of the packet as an index. In an embodiment of the invention the number of entries in the assignment table is larger than the number of server nodes.

In an embodiment of the invention TCP (Transmission Control Protocol, TCP) protocol is used in IP traffic, and a connection tuple $<IP_S, port_S, IP_D, port_D>$ as a whole or in part is used as the distribution key. $IP_S$ represents the source IP address, *ports* represents the source port number, $IP_D$ represents the destination IP address and $port_D$ represents the destination port number.

In an embodiment of the invention SCTP (Stream Control Transmission Protocol, SCTP) protocol is used in IP traffic, and an association $<IP_S, port_S, IP_D, port_D, protocol>$ as a whole or in part is used as the distribution key. $IP_S$ represents the source IP address, *ports* represents the source port number, $IP_D$ represents the destination IP address, $port_D$ represents the destination port number and *protocol* represents the identifier of the higher-level protocol used.

In an embodiment of the invention a new node is added to the server cluster, and at least one entry in the assignment table is updated to contain the IP address of the added new node.

In an embodiment of the invention a node from the server cluster is removed, and each entry in the assignment table containing the IP address of the removed node is updated to contain the IP address of one of the remaining nodes.

In an embodiment of the invention the load balancers further comprise an adder for adding the obtained offset value of a packet to a base address assigned to the server cluster to obtain the destination address for the packet, which destination address is one of a range of IP addresses, of which range more than one address is assigned per each server node. Preferably said range of IP addresses is continuous. In an embodiment of the invention the number of addresses in the range of IP addresses is larger than the number of server nodes.

In an embodiment of the invention a new node is added to the server cluster, and at least one address of the range of IP addresses is reassigned to the added new node.

In an embodiment of the invention a node from the server cluster is removed, and the IP addresses of the removed node are reassigned to the remaining nodes.

In an embodiment of the invention at least one old server node is replaced with at least one new server node, each packet is analyzed to determine whether it initiates a session, packets initiating a session are forwarded to the new server node, and packets not initiating a session are forwarded to both the new server node and the old server node. Thus, this approach allows for graceful reassignment of a set of hash buckets from one server node to another. A packet initiating a session is sent only to the new node taking over. All other packets are sent both to the new and the old node or nodes. After a predetermined period of time it can be assumed that all sessions served by the old server node have ended and the old node can be taken off-line. In this approach the assignment table has at least two columns; one for new or current assignment and one or more for the old or outgoing assignment.

In an embodiment of the invention unicast IP addresses are used as the unique IP addresses assigned to each server node, at least one multicast IP address is bound to several server nodes, each packet is analyzed to determine whether it initiates a session, packets initiating a session are forwarded using the unicast address as the destination address, and packets not initiating a session are forwarded using the multicast address as the destination address. Thus this approach allows for graceful reassignment without any assignment table. Each bucket is assigned two IP addresses; a normal unicast address associated with one server node and an IP multicast address bound to several server nodes. The normal unicast address is bound to the incoming node and all packets initiating a session are forwarded with this address. Additionally each outgoing node is bound to one unicast address in the scope of the multicast address and all packets not initiating a session are forwarded with this address. Thus reconfiguration of server nodes causes no change in the load balancers. The bindings of the IP addresses to the server nodes are changed to direct traffic to correct nodes.

The present invention provides a load balancer with both scalability and high availability. Since each load balancer is identical, traffic can pass through any load balancer. If an anycast mechanism, such as IPv6 (Internet Protocol, Version 6) anycast addresses, is used, each individual packet can be routed through any load balancer. Since the number of hash buckets is larger than the number of server nodes, dynamic scaling and configuration of the server cluster is possible. In particular, the following three scenarios can be handled without having to reset: unexpected failure of a server node, controlled shutdown of a server node and addition of a new server node to a server cluster.

## BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:

> **Fig 1** is a flow chart illustrating a method according to one embodiment of the present invention.
> **Fig 2** is a block diagram illustrating a system according to one embodiment of the present invention, and
> **Fig 3** is a block diagram illustrating a system according to another embodiment of the present invention.

## DETAILED DESCRIPTION OF THE INVENTION

Reference will now be made in detail to the embodiments of the present invention, examples of which are illustrated in the accompanying drawings.

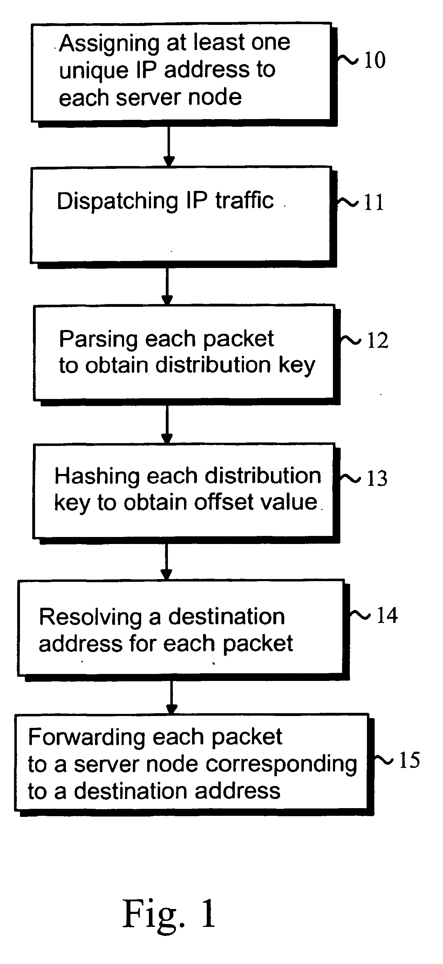

Figure 1 illustrates a method for stateless load sharing for a server cluster in an IP based telecommunications network. At least one unique IP address is assigned to each server node of a server cluster, block 10. IP traffic comprising sessions comprising packets is dispatched, block 11. At least one predetermined field from each dispatched packet or PDU contained within is identified and extracted to be used as a packet specific distribution key, block 12. Each distribution key is hashed to obtain an offset value for each packet, block 13. A packet specific destination address is resolved for each packet using the obtained offset values, said destination address comprising the IP address of the server node to which said packet is to be forwarded, block 14. Each packet is forwarded to a server node corresponding to its resolved destination address, block 15.

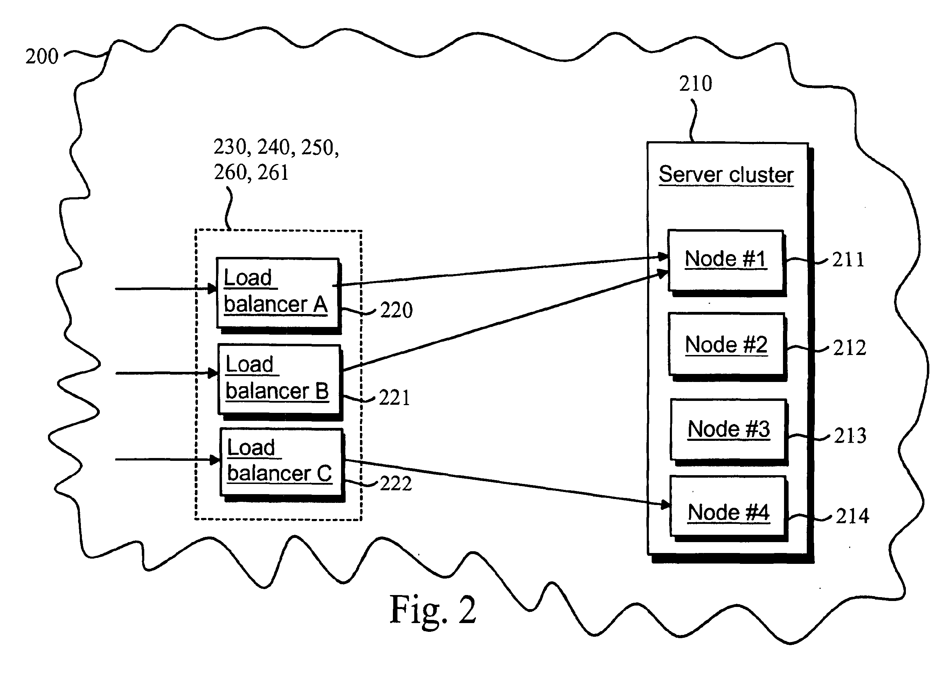

Figure 2 illustrates a system for stateless load sharing for a server cluster in an IP based telecommunications network. The system comprises an IP based telecommunications network 200 for dispatching IP traffic comprising sessions comprising packets. The system further comprises a server cluster 210 comprising functionally identical server nodes 211, 212, 213 and 214 for running an application process, each server node of which is assigned at least one unique IP address. The system further comprises one or more functionally identical, stateless load balancers 220, 221 and 222 for receiving the packets and forwarding them to various server nodes. The load balancers 220, 221 and 222 are connected to the server cluster 210.

The load balancers 220, 221 and 222 further comprise a distribution key obtainer 230 for identifying and extracting at least one predetermined field from each dispatched packet or PDU contained within to be used as a packet specific distribution key. The load balancers 220, 221 and 222 further comprise a hasher 240 for hashing each distribution key to obtain an offset value for each packet. The load balancers 220, 221 and 222 further comprise a resolver 250 for resolving a packet specific destination address for each packet using the obtained offset values, said destination address comprising the IP address of the server node to which said packet is to be forwarded. In one embodiment of the invention TCP protocol is used in IP traffic, and a connection tuple $<IP_S, port_S, IP_D, port_D>$ as a whole or in part is used as the distribution key. In another embodiment of the invention SCTP protocol is used in IP traffic, and an association $<IP_S, port_S, IP_D, port_D, protocol>$ as a whole or in part is used as the distribution key.

The load balancers 220, 221 and 222 further comprise an assignment table 260 consisting of entries each comprising an IP address assigned to a server node, said table containing the IP address of each server node in one or more entries. The load balancers 220, 221 and 222 further comprise a retriever 261 for retrieving the destination address for a packet from the assignment table 260 by using the obtained offset value of the packet as an index. The number of entries in the assignment table 260 is larger than the number of server nodes.

If a new node is added to the server cluster, at least one entry in the assignment table 260 is updated to contain the IP address of the added new node. If a node from the server cluster 210 is removed, each entry in the assignment table 260 containing the IP address of the removed node is updated to contain the IP address of one of the remaining nodes.

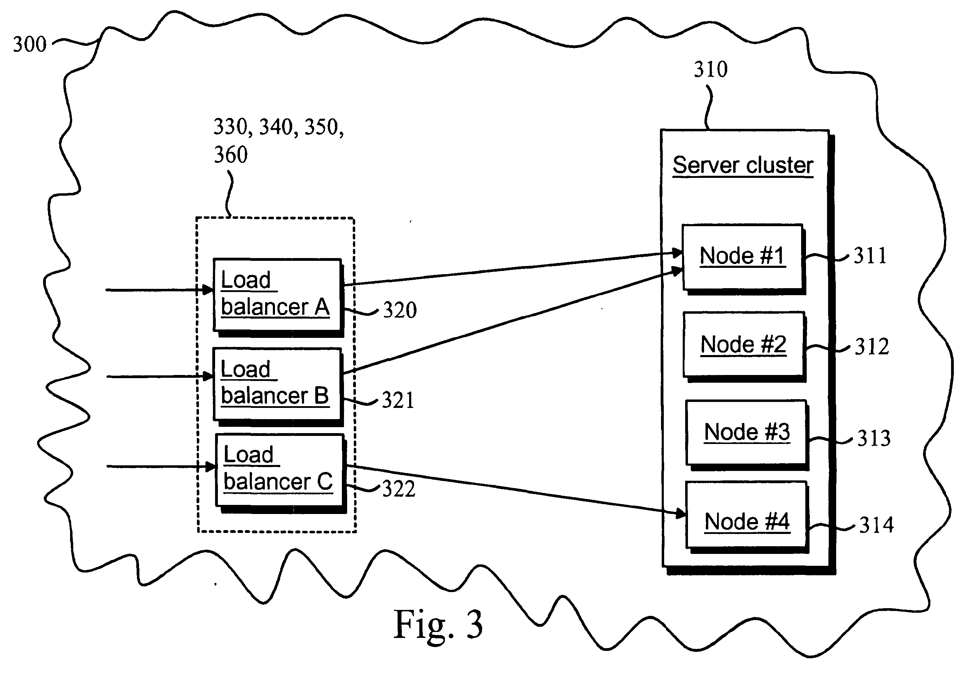

Figure 3 illustrates a system for stateless load sharing for a server cluster in an IP based telecommunications network. The system comprises an IP based telecommunications network 300 for dispatching IP traffic comprising sessions comprising packets. The system further comprises a server cluster 310 comprising functionally identical server nodes 311, 312, 313 and 314 for running an application process, each server node of which is assigned at least one unique IP address. The system further comprises one or more functionally identical, stateless load balancers 320, 321 and 322 for receiving the packets and forwarding them to various server nodes. The load balancers 320, 321 and 322 are connected to the server cluster 310.

The load balancers 320, 321 and 322 further comprise a distribution key obtainer 330 for identifying and extracting at least one predetermined field from each dispatched packet or PDU contained within to be used as a packet specific distribution key. The load balancers 320, 321 and 322 further comprise a hasher 340 for hashing each distribution key to obtain an offset value for each packet. The load balancers 320, 321 and 322 further comprise a resolver 350 for resolving a packet specific destination address for each packet using the obtained offset values, said destination address comprising the IP address of the server node to which said packet is to be forwarded.

The load balancers 320, 321 and 322 further comprise an adder 360 for adding the obtained offset value of a packet to a base address assigned to the server cluster 310 to obtain the destination address for the packet, which destination address is one of a range of IP addresses, of which range more than one address is assigned per each server node. The number of addresses in the range of IP addresses is larger than the number of server nodes.

If a new node is added to the server cluster, at least one address of the range of IP addresses is reassigned to the added new node. If a node from the server cluster is removed, the IP addresses of the removed node are reassigned to the remaining nodes.

It is obvious to a person skilled in the art that with the advancement of technology, the basic idea of the invention may be implemented in various ways. The invention and its embodiments are thus not limited to the examples described above, instead they may vary within the scope of the claims.

**Claims**

1. A method for stateless load sharing for a server cluster in an IP based telecommunications network, comprising the steps of:

   assigning (10) at least one unique IP address to each server node of a server cluster,
   dispatching (11) IP traffic comprising sessions comprising packets, and
   identifying and extracting (12) at least one predetermined field from each dispatched packet or PDU contained within to be used as a distribution key,
   **characterized in, that** the method further comprises the steps of:
   hashing (13) each distribution key to obtain an offset value for each packet, such that *offset value = hash(key) mod M*, where *key* represents the distribution key, *hash* represents a hash function, *M* represents the number of hash bucket assignments and *mod M* represents modulus M of hash value, and where the number of hash bucket assignments is larger than the number of the server nodes of the server cluster,
   resolving (14) a packet specific destination address for each packet using the obtained offset values, said destination address comprising the IP address of the server node to which said packet is to be forwarded, and
   forwarding (15) each packet to a server node corresponding to its resolved destination address.

2. The method according to claim 1, **characterized in that** the method further comprises the steps of:

   generating an assignment table consisting of entries each comprising an IP address assigned to a server node, said table containing the IP address of each server node in one or more entries, and
   using the obtained offset value of a packet as an index with which to retrieve the destination address for the packet from the generated assignment table.

3. The method according to claim 2, **characterized in that** the number of entries in the assignment table is larger than the number of server nodes.

4. The method according to claims 2 or 3, **characterized in that** the method further comprises the steps of:

   using TCP protocol in IP traffic, and
   using a connection tuple $<IP_S, port_S, IP_D, port_D>$ of source and destination IP address and port combinations as a whole or in part as the distribution key.

5. The method according to claims 2 or 3, **character-**

**ized in that** the method further comprises the steps of:

using Stream Control Transmission Protocol in IP traffic, and

using an association <$IP_S, port_S, IP_D, port_D, protocol$> of source and destination IP address and port combinations as a whole or in part as the distribution key.

6. The method according to claims 2, 3, 4 or 5, **characterized in that** the method further comprises the steps of:

adding a new node to the server cluster, and updating at least one entry in the assignment table to contain the IP address of the added new node.

7. The method according to claims 2, 3, 4, 5 or 6, **characterized in that** the method further comprises the steps of:

removing a node from the server cluster, and updating each entry in the assignment table containing the IP address of the removed node to contain the IP address of one of the remaining nodes.

8. The method according to claim 1, **characterized in that** the method further comprises the steps of:

using a range of IP addresses while assigning addresses to the server nodes, of which range one or more addresses are assigned per each server node,

assigning a base address to the server cluster, and

combining the obtained offset value of a packet and the assigned base address to obtain the destination address for the packet.

9. The method according to claim 8, **characterized in that** the number of addresses in the range of IP addresses is larger than the number of server nodes.

10. The method according to claim 8 or 9, **characterized in that** the method further comprises the steps of:

adding a new node to the server cluster, and reassigning at least one address of the range of IP addresses to the added new node.

11. The method according to claims 8, 9 or 10, **characterized in that** the method further comprises the steps of:

removing a node from the server cluster, and

reassigning the IP addresses of the removed node to the remaining nodes.

12. The method according to claim 1, **characterized in that** the method further comprises the steps of:

replacing at least one old server node with at least one new server node,

analyzing each packet to determine whether it initiates a session,

forwarding packets initiating a session to the new server node, and

forwarding packets not initiating a session to both the new server node and the old server node.

13. The method according to claim 1, **characterized in that** the method further comprises the steps of:

using unicast IP addresses as the unique IP addresses assigned to each server node,

binding at least one multicast IP address to several server nodes,

analyzing each packet to determine whether it initiates a session,

forwarding packets initiating a session using the unicast address as the destination address, and

forwarding packets not initiating a session using the multicast address as the destination address.

14. A system for stateless load sharing for a server cluster in an IP based telecommunications network, comprising:

an IP based telecommunications network (200) for dispatching IP traffic comprising sessions comprising packets,

a server cluster (210) comprising functionally identical server nodes (211, 212,..., N) for running an application process, each server node of which is assigned at least one unique IP address,

one or more functionally identical, stateless load balancers (220, 221,..., N) for receiving the packets and forwarding them to various server nodes, which load balancers are connected to the server cluster, and

a distribution key obtainer (230) for identifying and extracting at least one predetermined field from each dispatched packet or PDU contained within to be used as a distribution key,

**characterized in, that** the load balancers further comprise:

a hasher (240) for hashing each distribution key to obtain an offset value for each packet, such that **offset value** = *hash* (**key**) *mod* **M**, where **key** represents the distribution key, *hash* represents a hash function, **M** represents the number of hash bucket assignments and *mod **M*** represents modulus M of hash value, and where the number of hash bucket assignments is larger than the number of the server nodes of the server cluster, and

a resolver (250) for resolving a packet specific destination address for each packet using the obtained offset values, said destination address comprising the IP address of the server node to which said packet is to be forwarded.

**15.** The system according to claim 14, **characterized in that** the load balancers further comprise:

an assignment table (260) consisting of entries each comprising an IP address assigned to a server node, said table containing the IP address of each server node in one or more entries, and

a retriever (261) for retrieving the destination address for a packet from the assignment table by using the obtained offset value of the packet as an index.

**16.** The system according to claim 15, **characterized in that** the number of entries in the assignment table is larger than the number of server nodes.

**17.** The system according to claim 14, **characterized in that** the load balancers further comprise:

an adder (360) for combining the obtained offset value of a packet to a base address assigned to the server cluster to obtain the destination address for the packet, which destination address is one of a range of IP addresses, of which range one or more addresses are assigned per each server node.

**18.** The system according to claim 17, **characterized in that** the number of addresses in the range of IP addresses is larger than the number of server nodes.

**Patentansprüche**

**1.** Verfahren zur zustandslosen Auslastungsverteilung für eine Server-Gruppe in einem IP-basierten Telekommunikationsnetzwerk, umfassend die Schritte:

- Zuweisen (10) von mindestens einer eindeutigen IP-Adresse an jeden Serverknoten einer Server-Gruppe;
- Ausgeben (11) von IP-Verkehr, der Sitzungen umfasst, die Pakete umfassen; und
- Identifizieren und Extrahieren (12) von mindestens einem vorbestimmten Feld aus jedem ausgegebenen Paket oder einer darin enthaltenen PDU zur Verwendung als ein Verteilungsschlüssel;

**dadurch gekennzeichnet, dass** das Verfahren weiter die Schritte umfasst:

- Ausführen von Hashing (13) an jedem Verteilungsschlüssel, um einen Offsetwert für jedes Paket zu erhalten, so dass **Offsetwert** = *Hash* **(Key)** *mod* **M,** wobei **Key** den Verteilungsschlüssel repräsentiert, *Hash* eine Hash-Funktion repräsentiert, **M** die Anzahl von Hash-Bukket-Zuweisungen repäsentiert und *mod* **M** den Modulus M des Hash-Werts repräsentiert, und wobei die Anzahl von Hash-Bucket-Zuweisungen größer ist als die Anzahl von Serverknoten der Server-Gruppe;
- Auflösen (14) einer paketspezifischen Bestimmungsadresse für jedes Paket, unter Verwendung der erhaltenen Offsetwerte, wobei die Bestimmungsadresse die IP-Adresse des Serverknotens umfasst, an den das Paket weiterzuleiten ist; und
- Weiterleiten (15) von jedem Paket an einen Serverknoten entsprechend seiner aufgelösten Bestimmungsadresse.

**2.** Verfahren nach Anspruch 1, **dadurch gekennzeichnet, dass** das Verfahren weiter die Schritte umfasst:

- Erzeugen einer Zuweisungstabelle, die aus Einträgen besteht, wobei jeder eine IP-Adresse umfasst, die einem Serverknoten zugewiesen ist, wobei die Tabelle die IP-Adresse von jedem Serverknoten in einem oder mehreren Einträgen enthält; und
- Verwenden der erhaltenen Offsetwerte eines Pakets als einen Index, mit dem die Bestimmungsadresse für das Paket aus der erzeugten Zuweisungstabelle abzurufen ist.

**3.** Verfahren nach Anspruch 2, **dadurch gekennzeichnet, dass** die Anzahl von Einträgen in der Zuweisungstabelle größer als die Anzahl von Serverknoten ist.

**4.** Verfahren nach Anspruch 2 oder 3, **dadurch gekennzeichnet, dass** Verfahren weiter die Schritte umfasst:

- Verwenden eines TCP-Protokolls bei IP-Verkehr; und
- Verwenden eines Verbindungs-Tupels <$IP_S$, $port_S$, $IP_D$, $port_D$> von Kombinationen von Quell- und Bestimmungs-IP-Addressen und -Ports als Ganzes oder teilweise als den Verteilungsschlüssel.

5. Verfahren nach Anspruch 2 oder 3, **dadurch gekennzeichnet, dass** Verfahren weiter die Schritte umfasst:

- Verwenden des Stream Control Transmission Protokolls bei IP-Verkehr; und
- Verwenden einer Verknüpfung <$IP_S$, $port_S$, $IP_D$, $port_D$, Protokoll> von Kombinationen von Quell- und Bestimmungs-IP-Addressen und -Ports als Ganzes oder teilweise als den Verteilungsschlüssel.

6. Verfahren nach Anspruch 2, 3, 4 oder 5, **dadurch gekennzeichnet, dass** Verfahren weiter die Schritte umfasst:

- Hinzufügen eines neuen Knotens zu der Servergruppe; und
- Aktualisieren von mindestens einem Eintrag in der Zuweisungstabelle, so dass er die IP-Adresse des neu hinzugefügten Knotens enthält.

7. Verfahren nach Anspruch 2, 3, 4, 5 oder 6, **dadurch gekennzeichnet, dass** Verfahren weiter die Schritte umfasst:

- Entfernen eines Knotens aus der Servergruppe; und
- Aktualisieren jedes Eintrags in der Zuweisungstabelle, der die IP-Adresse des entfernten Knotens enthält, so dass er die IP-Adresse von einem der verbleibenden Knoten enthält.

8. Verfahren nach Anspruch 1, **dadurch gekennzeichnet, dass** Verfahren weiter die Schritte umfasst:

- Verwenden eines Bereichs von IP-Adressen beim Zuweisen von Adressen an die Serverknoten, wobei von dem Bereich eine oder mehrere Adressen pro Serverknoten zugewiesen werden;
- Zuweisen einer Basisadresse zu der Servergruppe; und
- Kombinieren des erhaltenen Offsetwerts eines Pakets und der zugewiesenen Basisadresse, um die Bestimmungsadresse für das Paket zu erhalten.

9. Verfahren nach Anspruch 8, **dadurch gekennzeichnet, dass** die Anzahl von Adressen in dem Bereich von IP-Adressen größer als die Anzahl von Serverknoten ist.

10. Verfahren nach Anspruch 8 oder 9, **dadurch gekennzeichnet, dass** Verfahren weiter die Schritte umfasst:

- Hinzufügen eines neuen Knotens zu der Servergruppe; und
- Neu Zuweisen von mindestens einer Adresse des Bereiches von IP-Adressen zu dem hinzugefügten neuen Knoten.

11. Verfahren nach Anspruch 8, 9 oder 10, **dadurch gekennzeichnet, dass** Verfahren weiter die Schritte umfasst:

- Entfernen eines Knotens aus der Servergruppe; und
- Neu Zuweisen der IP-Adressen des entfernten Knotens an die verbleibenden Knoten.

12. Verfahren nach Anspruch 1, **dadurch gekennzeichnet, dass** Verfahren weiter die Schritte umfasst:

- Ersetzen von mindestens einem alten Serverknoten mit mindestens einem neuen Serverknoten;
- Analysieren von jedem Paket, um zu bestimmten, ob es eine Sitzung initiiert;
- Weiterleiten von Paketen, die eine Sitzung initiieren, an den neuen Serverknoten; und
- Weiterleiten von Paketen, die keine Sitzung initiieren, an sowohl den neuen Serverknoten als auch den alten Serverknoten.

13. Verfahren nach Anspruch 1, **dadurch gekennzeichnet, dass** Verfahren weiter die Schritte umfasst:

- Verwenden von Unicast-IP-Adressen als die eindeutigen IP-Adressen, die jedem Serverknoten zugewiesen sind;
- Binden von mindestens einer Multicast-IP-Adresse an einige Serverknoten;
- Analysieren von jedem Paket, um zu bestimmen, ob es eine Sitzung initiiert;
- Weiterleiten von Paketen, die eine Sitzung initiieren, unter Verwendung der Unicast-IP-Adresse als die Bestimmungsadresse; und
- Weiterleiten von Paketen, die keine Sitzung initiieren, unter Verwendung der Multicast-IP-Adresse als die Bestimmungsadresse.

14. System zur zustandslosen Auslastungsverteilung für eine Server-Gruppe in einem IP-basierten Telekommunikationsnetzwerk, umfassend:

- ein IP-basiertes Telekommunikationsnetzwerk (200) zum Ausgeben von IP-Verkehr, der Sitzungen umfasst, die Pakete umfassen;
- eine Servergruppe (210), die funktional identische Serverknoten (211, 212, ..., N) umfasst, um einen Anwendungsprozess auszuführen, wobei jedem Serverknoten davon mindestens eine eindeutige IP-Adresse zugewiesen ist;

- einen oder mehrere funktional identische, zustandslose Auslastungsausgleicher (220, 221, ..., N) zum Empfangen der Pakete und Weiterleiten davon an verschiedene Serverknoten, wobei die Auslastungsausgleicher mit der Servergruppe verbunden sind; und

- eine Einrichtung (230) zum Erhalten eines Verteilungsschlüssels zum Identifizieren und Extrahieren von mindestens einem vorbestimmten Feld aus jedem ausgegebenen Paket oder einer darin enthaltenen PDU zur Verwendung als ein Verteilungsschlüssel;

**dadurch gekennzeichnet, dass** die Auslastungsausgleicher weiter umfassen:

- eine Hash-Einrichtung (240) zum Ausführen von Hashing an jedem Verteilungsschlüssel, um einen Offsetwert für jedes Paket zu erhalten, so dass **Offsetwert** = *Hash* (**Key**) *mod M,* wobei **Key** den Verteilungsschlüssel repräsentiert, *Hash* eine Hash-Funktion repräsentiert, **M** die Anzahl von Hash-Bukket-Zuweisungen repräsentiert und *mod M* den Modulus M des Hash-Werts repräsentiert, und wobei die Anzahl von Hash-Bucket-Zuweisungen größer als die Anzahl von Serverknoten der Server-Gruppe ist; und

- eine Auflösungseinrichtung (250) zum Auflösen einer paketspezifischen Bestimmungsadresse für jedes Paket, unter Verwendung der erhaltenen Offsetwerte, wobei die Bestimmungsadresse die IP-Adresse des Serverknotens umfasst, an den das Paket weiterzuleiten ist.

15. System nach Anspruch 14, **dadurch gekennzeichnet, dass** die Auslastungsausgleicher weiter umfassen:

- eine Zuweisungstabelle (260), die aus Einträgen besteht, wobei jeder eine IP-Adresse umfasst, die einem Serverknoten zugewiesen ist, wobei die Tabelle die IP-Adresse von jedem Serverknoten in einem oder mehreren Einträgen enthält; und

- eine Abrufeinrichtung (261) zum Abrufen der Bestimmungsadresse für ein Paket aus der Zuweisungstabelle unter Verwendung der erhaltenen Offsetwerte des Pakets als einen Index.

16. System nach Anspruch 15, **dadurch gekennzeichnet, dass** die Anzahl von Einträgen in der Zuweisungstabelle größer als die Anzahl von Serverknoten ist.

17. System nach Anspruch 14, **dadurch gekennzeichnet, dass** die Auslastungsausgleicher weiter umfassen:

- eine Addier-Einrichtung (360) zum Kombinieren des erhaltenen Offsetwertes eines Pakets mit einer Basisadresse, die der Servergruppe zugewiesen ist, um die Bestimmungsadresse für das Paket zu erhalten, wobei die Bestimmungsadresse eine aus einem Bereich von IP-Adressen ist, wobei von dem Bereich eine oder mehrere Adressen pro Serverknoten zugewiesen sind.

18. System nach Anspruch 17, **dadurch gekennzeichnet, dass** die Anzahl von Adressen in dem Bereich von IP-Adressen größer als die Anzahl von Serverknoten ist.

## Revendications

1. Procédé de répartition de charge passive pour une batterie de serveurs dans un réseau de télécommunications basé sur le protocole internet IP, comprenant les étapes consistant à :

attribuer (10) au moins une adresse IP unique à chaque noeud de serveur d'une batterie de serveurs,

acheminer (11) un trafic IP comprenant des sessions comprenant des paquets, et

identifier et extraire (12) au moins un champ prédéterminé à partir de chacun des paquets envoyés ou PDU contenus destinés à être utilisés en tant que clé de distribution,

**caractérisé en ce que** le procédé comprend en outre les étapes consistant à :

réaliser un hachage (13) sur chaque clé de distribution afin d'obtenir une valeur décalée pour chaque paquet, de sorte que la valeur décalée = hache (clé) mod M, où la clé représente la clé de distribution, hache représente une fonction de hachage, M représente le nombre d'attributions de lot de hachage et mod M représente le module M de la valeur de hachage, et où le nombre d'attributions de lots de hachage est supérieur au nombre de noeuds de serveur de la batterie de serveurs,

résoudre (14) une adresse de destination spécifique au paquet pour chaque paquet en utilisant la valeur décalée obtenue, ladite adresse de destination comprenant l'adresse IP du noeud de serveur auquel ledit paquet doit être réacheminé, et

réacheminer (15) chaque paquet à un noeud de serveur correspondant à son adresse de destination résolue.

**2.** Procédé selon la revendication 1, **caractérisé en ce que** le procédé comprend en outre les étapes consistant à :

générer un tableau d'attribution constitué d'entrées, chacune comprenant une adresse IP attribuée à un noeud de serveur, ledit tableau comprenant l'adresse IP de chaque noeud de serveur dans une ou dans plusieurs entrées, et utiliser la valeur décalée obtenue d'un paquet comme indice pour retirer l'adresse de destination pour le paquet du tableau d'attribution généré.

**3.** Procédé selon la revendication 2, **caractérisé en ce que** le nombre d'entrées dans le tableau d'attribution est supérieur au nombre de noeuds de serveur.

**4.** Procédé selon la revendication 2 ou 3, **caractérisé en ce que** le procédé comprend en outre les étapes consistant à :

utiliser un protocole TCP dans un trafic IP, et utiliser un uplet de connexion $<IP_S, port_S, IP_D, port_D>$ d'adresse source et de destination IP et de combinaisons de ports dans son ensemble ou en partie comme clé de distribution.

**5.** Procédé selon la revendication 2 ou 3, **caractérisé en ce que** le procédé comprend en outre les étapes consistant à :

utiliser un protocole de transmission de commande de flux dans le trafic IP, et utiliser une association $<IP_S, port_S, IP_D, port_D>$ d'adresse source et de destination IP et de combinaisons de ports dans son ensemble ou en partie comme clé de distribution.

**6.** Procédé selon la revendication 2, 3, 4 ou 5, **caractérisé en ce que** le procédé comprend en outre les étapes consistant à :

ajouter un nouveau noeud à la batterie de serveurs, et mettre à jour au moins une entrée dans le tableau d'attribution pour contenir l'adresse IP du nouveau noeud ajouté.

**7.** Procédé selon la revendication 2, 3, 4, 5 ou 6, **caractérisé en ce que** le procédé comprend en outre les étapes consistant à :

extraire un noeud de la batterie de serveurs, et

mettre à jour chaque entrée dans le tableau d'attribution contenant l'adresse IP du noeud extrait pour contenir l'adresse IP de chacun des noeuds restants.

**8.** Procédé selon la revendication 1, **caractérisé en ce que** le procédé comprend en outre les étapes consistant à :

utiliser une plage d'adresse IP tout en attribuant des adresses aux noeuds de serveur, une ou plusieurs adresses de ladite plage étant attribuée par chaque noeud de serveur, et attribuer une adresse de base à la batterie de serveurs, et combiner la valeur décalée obtenue d'un paquet et l'adresse de base attribuée pour obtenir l'adresse de destination pour le paquet.

**9.** Procédé selon la revendication 8, **caractérisé en ce que** le nombre d'adresses dans la plage d'adresses IP est supérieur au nombre de noeuds de serveur.

**10.** Procédé selon la revendication 8 ou 9, **caractérisé en ce que** le procédé comprend en outre les étapes consistant à :

ajouter un nouveau noeud à la batterie de serveurs, et attribuer à nouveau au moins une adresse de la plage d'adresses IP au nouveau noeud ajouté.

**11.** Procédé selon la revendication 8, 9 ou 10, **caractérisé en ce que** le procédé comprend en outre les étapes consistant à :

extraire un noeud de la batterie de serveurs, et attribuer à nouveau les adresses IP du noeud extrait aux noeuds restants.

**12.** Procédé selon la revendication 1, **caractérisé en ce que** le procédé comprend en outre les étapes consistant à :

remplacer au moins un ancien noeud de serveur par au moins un nouveau noeud de serveur, analyser chaque paquet pour déterminer s'il initialise une session, réacheminer des paquets initialisant une session pour le nouveau noeud de serveur, et réacheminer des paquets qui n'initialisent pas une session à la fois au nouveau noeud de serveur et à l'ancien noeud de serveur.

**13.** Procédé selon la revendication 1, **caractérisé en ce que** le procédé comprend en outre les étapes consistant à :

utiliser des adresses IP à envoi individuel comme adresses IP uniques attribuées à chaque noeud de serveur,

lier au moins une adresse IP à envoi individuel à plusieurs noeuds de serveur,

analyser chaque paquet pour déterminer s'il initialise une session,

réacheminer des paquets initialisant une session en utilisant l'adresse à envoi individuel comme adresse de destination, et

réacheminer des paquets qui n'initialisent pas une session en utilisant l'adresse à envoi individuel comme adresse de destination.

14. Système de répartition de charge passive pour une batterie de serveurs dans un réseau de télécommunication IP, comprenant :

un réseau de télécommunication IP (200) pour répartir un trafic IP comprenant des sessions comprenant des paquets,

une batterie de serveurs (210) comprenant des noeuds de serveur fonctionnellement identiques (211, 212, ..., N) pour exécuter un processus d'application, chaque noeud de serveur recevant au moins une adresse IP unique,

un ou plusieurs répartiteurs de charge passive fonctionnellement identiques (220, 221,..., N) pour recevoir les paquets et les réacheminer vers différents noeuds de serveurs, lesquels répartiteurs de charge sont reliés à la batterie de serveurs, et

un dispositif d'obtention de clé de distribution (230) pour identifier et extraire au moins un champ prédéterminé de chaque paquet envoyé ou PDU contenu dans celui-ci pour être utilisé comme clé de distribution,

**caractérisé en ce que** les répartiteurs de charge comprennent en outre :

un dispositif de hachage (240) pour hacher chaque clé de distribution afin d'obtenir une valeur décalée pour chaque paquet, cette valeur décalée = hache (clé) mod M, où clé représente la clé de distribution, M représente le nombre d'attributions de lots de hachage et mod M représente le module M de la valeur de hachage et où le nombre d'attributions de lots de hachage est supérieur au nombre des noeuds de serveur de la batterie de serveurs, et

un résolveur (250) pour résoudre une adresse de destination spécifique à un paquet pour chaque paquet en utilisant les valeurs décalées obtenues, ladite adresse de destination comprenant l'adresse IP du noeud de serveur auquel doit être réacheminé le paquet.

15. Système selon la revendication 14, **caractérisé en ce que** les répartiteurs de charge comprennent en outre :

un tableau d'attribution (260) constitué d'entrées comprenant chacune une adresse IP attribuée à un noeud de serveur, ledit tableau contenant l'adresse IP de chaque noeud de serveur dans une ou dans plusieurs entrées, et

un dispositif d'extraction (261) pour extraire l'adresse de destination pour un paquet du tableau d'attribution en utilisant la valeur décalée obtenue du paquet comme indice.

16. Système selon la revendication 15, **caractérisé en ce que** le nombre d'entrées dans le tableau d'attribution est supérieur au nombre de noeuds de serveur.

17. Système selon la revendication 14, **caractérisé en ce que** les répartiteurs de charge comprennent en outre :

un sommateur (360) pour combiner la valeur décalée obtenue d'un paquet avec une adresse de base attribuée à la batterie de serveur pour obtenir l'adresse de destination du paquet, laquelle adresse de destination est une adresse parmi une plage d'adresses IP, une ou plusieurs adresses IP de cette plage étant attribuée par chaque noeud de serveur.

18. Système selon la revendication 17, **caractérisé en ce que** le nombre d'adresses dans la plage d'adresses IP est supérieur au nombre de noeuds de serveur.

Assigning at least one unique IP address to each server node ~10

Dispatching IP traffic ~11

Parsing each packet to obtain distribution key ~12

Hashing each distribution key to obtain offset value ~13

Resolving a destination address for each packet ~14

Forwarding each packet to a server node corresponding to a destination address ~15

Fig. 1

Fig. 2

Fig. 3

300

310

330, 340, 350, 360

Server cluster

Load balancer A 320

Load balancer B 321

Load balancer C 322

Node #1 311

Node #2 312

Node #3 313

Node #4 314

EP 1 442 575 B1

14

**EP 1 442 575 B1**

**REFERENCES CITED IN THE DESCRIPTION**

**Patent documents cited in the description**

- XP 001017123

**Non-patent literature cited in the description**

- **AVERSA L. et al.** Load Balancing a Cluster of Web Servers Using Distributed Packet Rewriting. *Computing and Communications Conference,* 20 February 2000, 24-29